# EUROPEAN PATENT APPLICATION

(11) **EP 4 523 768 A1**
(43) Date of publication of application: **19.03.2025**
(21) Application number: 24154115.0
(22) Date of filing: 26.01.2024
(51) Int. Cl.: A63F 13/52, G06T 15/60, G06T 19/00

(54) **GAME PROGRAM, GAME SYSTEM, GAME PROCESSING METHOD, AND GAME APPARATUS**

(30) Priority: 14.09.2023 JP 2023149297
(71) Applicant: Nintendo Co., Ltd., Kyoto 601-8501 (JP)
(72) Inventor: MINETA, Naoki, Minami-ku, Kyoto, 601-8501 (JP); NAKARI, Kazuhiro, Shimogyo-ku, Kyoto, 600-8216 (JP); MAEKAWA, Shuhei, Shimogyo-ku, Kyoto, 600-8216 (JP)
(74) Representative: Bardehle Pagenberg Partnerschaft mbB Patentanwälte Rechtsanwälte

(57) **Abstract**

A virtual space, in which at least a player character is placed and a back object is placed on a depth side with respect to the player character, is rendered in a frame buffer with orthographic projection and by performing a depth test. A degree of hiding is determined for each pixel on the basis of a hiding determination method based on SSAO, and the hiding determination method is a method in which, when comparing each of depth values of a plurality of sampling points set around a position, in the virtual space, corresponding to each pixel with a depth of a corresponding position in a depth buffer, a first offset is added to a position of the sampling point, and the comparison is performed. Then, a shadow is further rendered on a pixel corresponding to a portion for which the degree of hiding is high.

## Description

### CROSS REFERENCE TO RELATED APPLICATION

This application claims priority to Japanese Patent Application No. 2023-149297 filed on September 14, 2023, the entire contents of which are incorporated herein by reference.

### BACKGROUND OF THE INVENTION

### Field of the Invention

The present disclosure relates to image processing in game processing.

### Description of the Background Art

Conventionally, shadows in a virtual three-dimensional space have been represented by game processing or the like. A shadow representing method using a shadow volume technique has also been known.

The above technique is designed for representation with perspective projection. Therefore, in some cases, the technique is not suitable for the case where a game image is represented with orthographic projection as in 2D-like games.

### SUMMARY OF THE INVENTION

In view of the above, the following configuration examples are exemplified.

### (Configuration 1)

Configuration 1 is directed to a game program causing a processor of an information processing apparatus to:
control a player character object and a virtual camera in a virtual space in which at least the player character object is placed and a back object is placed on a depth side with respect to the player character object;
render the virtual space in a frame buffer with orthographic projection and by performing a depth test;
determine a degree of hiding for each pixel on the basis of a hiding determination method based on SSAO (Screen Space Ambient Occlusion), the hiding determination method being a method in which, when comparing each of depth values of a plurality of sampling points set around a position, in the virtual space, corresponding to each pixel with a depth of a corresponding position in a depth buffer, a first offset in a predetermined direction is added to a position of the sampling point, and the comparison is performed; and
further render a shadow at a pixel, in the frame buffer, corresponding to a portion for which the degree of hiding is determined to be high.

According to the above configuration example, when rendering the shadow of the player character object on the back object, a 2D-like shadow can be rendered.

### (Configuration 2)

In Configuration 2 based on Configuration 1 above, a plurality of the back objects may be placed in the virtual space in multiple layers at positions different in depth from each other, and the hiding determination method may be a hiding determination method in which the degree of hiding is not attenuated on the basis of a difference from the depth.

According to the above configuration example, even when the back object is placed at a depth (depth position) different from that in an appearance with orthographic projection, a shadow that gives no uncomfortable feeling when viewed in a 2D game can be rendered.

### (Configuration 3)

In Configuration 3 based on Configuration 2 above, a background object may be further placed in the virtual space on the depth side with respect to the back object, and the game program may cause the processor to render the shadow with pixels corresponding to the background object being excluded from targets.

According to the above configuration example, a shadow can be prevented from being rendered on the background object further away than the back object, and the back object and the background object can be represented in a distinguishable manner.

### (Configuration 4)

In Configuration 4 based on Configuration 1 above, the game program may further cause the processor to deform and render a predetermined object so as to make a normal vector thereof closer to a direction toward a position of the virtual camera, in the rendering of the virtual space in the frame buffer.

According to the above configuration example, not only the shadow but also the object itself can be rendered in a 2D manner. Accordingly, a sense of unity can be provided in terms of appearance.

### (Configuration 5)

In Configuration 5 based on Configuration 4 above, the game program may further cause the processor to deform the normal vector so as to make the normal vector closer to the direction toward the position of the virtual camera, by scaling a component thereof in a depth direction by a predetermined magnification and then normalizing a length of the normal vector.

According to the above configuration example, the normal vector can be deformed by a simple calculation method, and thus the processing load can be reduced.

### (Configuration 6)

In Configuration 6 based on Configuration 2 above, the game program may further cause the processor to render a plurality of character objects placed in the virtual space and including the player character object, with a second offset being added such that each character object has a different depth value, in the rendering in the frame buffer.

According to the above configuration example, even when a plurality of character objects are placed on the same axis in the virtual space, occurrence of representation of the character objects being stuck in each other can be avoided when rendering. In addition, since the degree of hiding is not attenuated on the basis of the difference from the depth, even if the depth values are made different from each other, the above shadow rendering method is not influenced.

According to the present disclosure, 2D game-like shadows can be rendered in a game using images obtained with orthographic projection.

### BRIEF DESCRIPTION OF THE DRAWINGS

FIG. 1 is a block diagram showing a non-limiting example of the hardware configuration of a game apparatus 2;
FIG. 2 is a non-limiting example diagram for describing 3D model pressing representation;
FIG. 3 is a non-limiting example diagram for describing the 3D model pressing representation;
FIG. 4 is a non-limiting example diagram for describing the 3D model pressing representation;
FIG. 5 is a non-limiting example diagram for describing the 3D model pressing representation;
FIG. 6 is a non-limiting example diagram for describing the 3D model pressing representation;
FIG. 7 is a non-limiting example diagram for describing adjustment of depth values of characters;
FIG. 8 is a non-limiting example diagram for describing the adjustment of the depth values of the characters;
FIG. 9 is a non-limiting example diagram for describing the adjustment of the depth values of the characters;
FIG. 10 is a non-limiting example diagram for describing SSAO-related processing;
FIG. 11 is a non-limiting example diagram for describing the SSAO-related processing;
FIG. 12 is a non-limiting example diagram for describing the SSAO-related processing;
FIG. 13 is a non-limiting example diagram for describing the SSAO-related processing;
FIG. 14 is a non-limiting example diagram for describing the SSAO-related processing;
FIG. 15 is a non-limiting example diagram for describing the SSAO-related processing;
FIG. 16 is a non-limiting example diagram for describing the SSAO-related processing;
FIG. 17 is a non-limiting example diagram for describing the SSAO-related processing;
FIG. 18 is a non-limiting example diagram for describing the SSAO-related processing;
FIG. 19 is a non-limiting example diagram for describing the SSAO-related processing;
FIG. 20 is a non-limiting example diagram for describing the SSAO-related processing;
FIG. 21 is a non-limiting example diagram for describing the SSAO-related processing;
FIG. 22 illustrates a memory map showing a non-limiting example of various kinds of data stored in a storage section 22 of the game apparatus 2;
FIG. 23 is a non-limiting example flowchart showing the details of rendering processing;
FIG. 24 is a non-limiting example flowchart showing the details of pixel shader processing;
FIG. 25 is a non-limiting example flowchart showing the details of post-processing; and
FIG. 26 is a non-limiting example flowchart showing the details of SSAO processing.

### DESCRIPTION OF THE PREFERRED EMBODIMENTS

Hereinafter, one exemplary embodiment of the present disclosure will be described.

### [Hardware configuration of game apparatus 2]

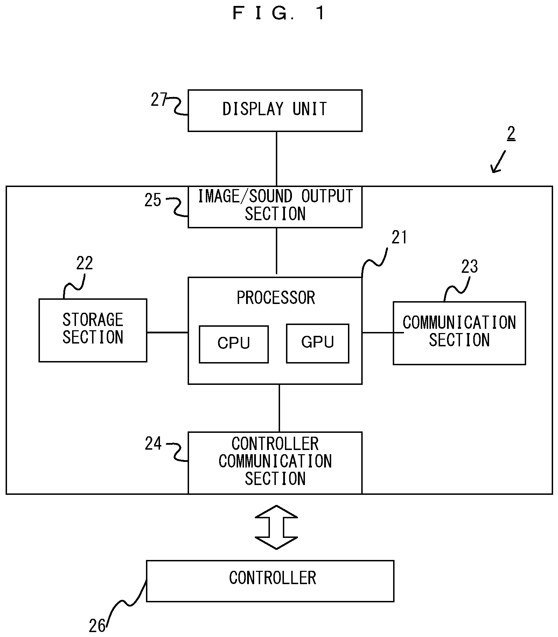

FIG. 1 is a block diagram showing an example of the hardware configuration of a game apparatus 2 according to the exemplary embodiment. In FIG. 1, the game apparatus 2 includes a processor 21. The processor 21 is an information processing section for executing various types of information processing to be executed in the game apparatus 2. In the exemplary embodiment, the processor 21 is composed of a SoC (System-on-a-chip) having at least a CPU (Central Processing Unit) function and a GPU (Graphics Processing Unit) function. In another exemplary embodiment, the CPU and the GPU may be configured separately. In addition, the contents of the present disclosure can also be applied to a configuration in which graphics processing is performed by a CPU without a GPU. The processor 21 performs the various types of information processing by executing an information processing program (e.g., a game program) stored in a storage section 22. The storage section 22 may be, for example, an internal storage medium such as a flash memory and a dynamic random access memory (DRAM), or may be configured to utilize an external storage medium mounted to a slot that is not shown, or the like.

The game apparatus 2 also includes a communication section 23 for performing communication with another game apparatus or a predetermined server.

The game apparatus 2 also includes a controller communication section 24 for the game apparatus 2 to perform wired or wireless communication with a controller 26.

Moreover, a display unit 27 (for example, a television or the like) is connected to the game apparatus 2 via an image/sound output section 25. The processor 21 outputs an image and sound generated, for example, by executing the above information processing, to the display unit 27 via the image/sound output section 25.

### [Processing assumed in exemplary embodiment]

Next, an outline of processing assumed in the exemplary embodiment will be described. In the exemplary embodiment, a game that uses a game image obtained by capturing a virtual space with orthographic projection is assumed. For example, a so-called side-view type game is assumed. In the game, a player can move a player character using the above controller 26. In addition, a virtual camera is also moved and controlled such that a screen scrolls horizontally (or vertically) as the player character moves. In the exemplary embodiment, various modifications are made to rendering processing so as to achieve a 2D game-like appearance, as representation in such a game image obtained with orthographic projection. That is, rendering itself is performed using a 3D CG technique, but a modification is made such that the appearance looks more like a 2D game. The 2D game-like appearance means, for example, that the sense of perspective and the sense of depth of a 3D model character are weaker than in the case of rendering through normal processing. In the exemplary embodiment, specifically, the following processes are modified. Owing to the synergistic effect of these processes, it is possible to achieve a more 2D game-like appearance.
(1) 3D model pressing representation
(2) Adjustment of depth values of characters in a depth test
(3) SSAO-related processing for character shadow representation

Hereinafter, an outline of each process will be described.

### [3D model pressing representation]

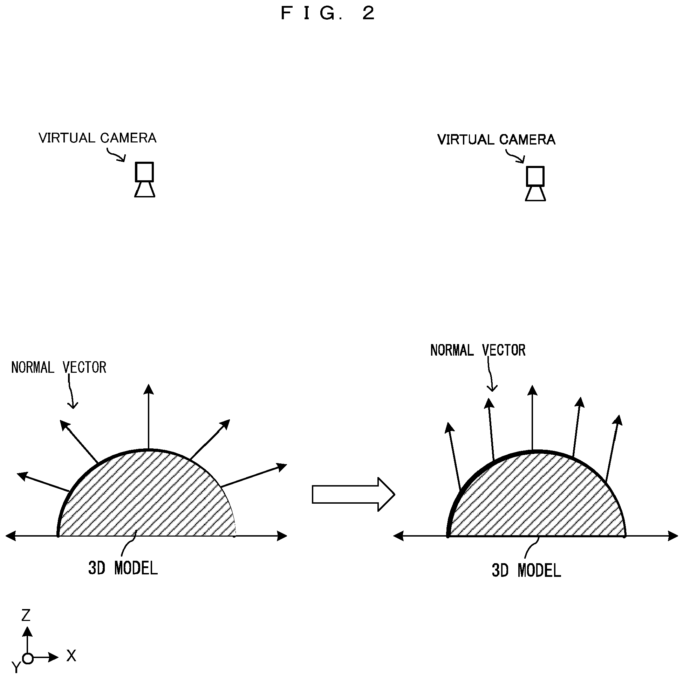

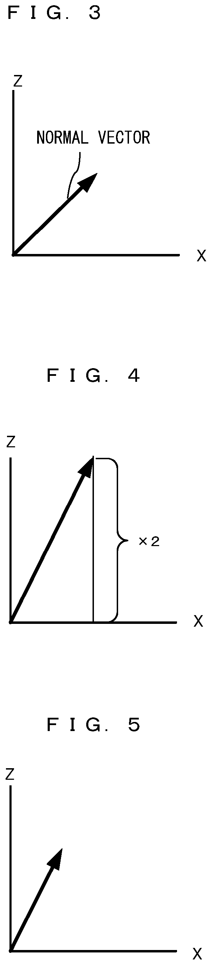

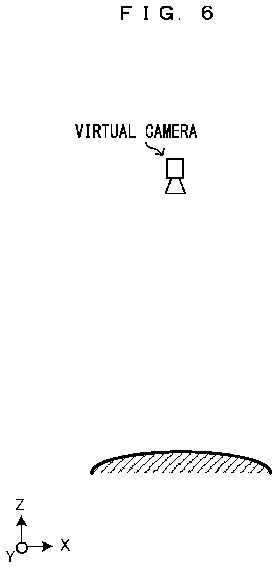

In the exemplary embodiment, each character is created as a 3D model. Therefore, when rendering is performed without any special modification, an image with shading based on the unevenness of the model is generated, resulting in a three-dimensional representation. In this respect, in the exemplary embodiment, vertex normals are deformed in processing in vertex shader, thereby performing a representation as if a 3D model was pressed on a screen. FIG. 2 shows an example of a part of a certain 3D model before and after deforming vertex normals. In FIG. 2, the left side shows an example before deformation, and the right side shows an example after deformation. FIG. 2 shows schematic overhead views of a virtual space, each showing a part, of the 3D model, having a curved surface in a cross-section horizontal to a Z axis. In FIG. 2, vertex normals on a surface on the virtual camera side (near side as seen from the viewpoint) are directed so as to spread substantially radially. In the exemplary embodiment, in the processing in the vertex shader, a process of deforming each vertex normal is performed such that the direction of each vertex normal is made closer to a direction toward the position of the virtual camera (direction horizontal to the front direction of the virtual camera) as shown in FIG. 2. More specifically, the process involves scaling a Z-axis component by a predetermined magnification and normalizing the length of the vertex normal. For example, it is supposed that there is a normal vector as shown in FIG. 3. The Z-axis component of the normal vector is doubled as shown in FIG. 4, for example, and the length of the normal vector is further normalized as shown in FIG. 5. By deforming the vertex normal as described above, a process of making the direction of the normal vector closer to the virtual camera side is performed as a result. Accordingly, even when a lighting process is performed, less shading is obtained, and a more flat appearance can be achieved. In addition, in this case, when viewed from the virtual camera, the 3D model appears as if having a flat shape, as shown in FIG. 6. The normal deformation may be applied to the entire 3D model or only to a part of the 3D model. For example, normal deformation may be performed for the head of a 3D model, but not for the body of the 3D model. This case is useful for the case where the 3D model is relatively small, and it is not desired to shade the head thereof so much, in order to make it easier to recognize a change in facial expression.

### [Adjustment of depth values (Z coordinates) of characters in depth test]

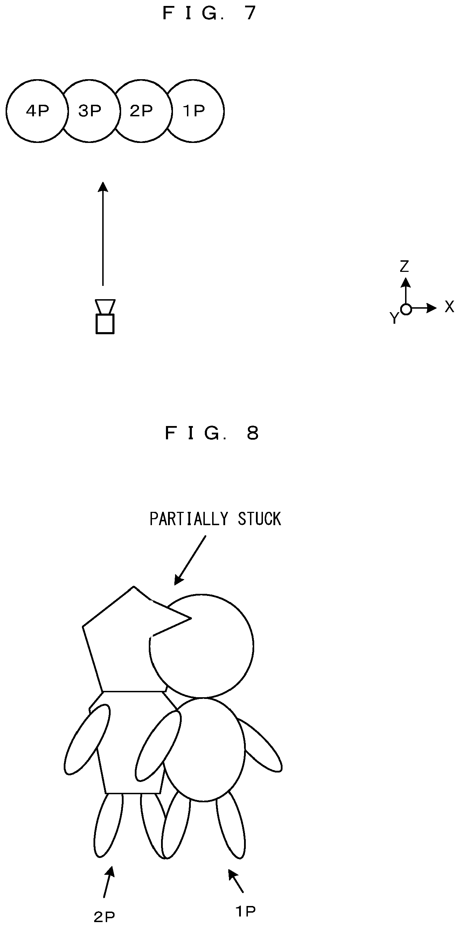

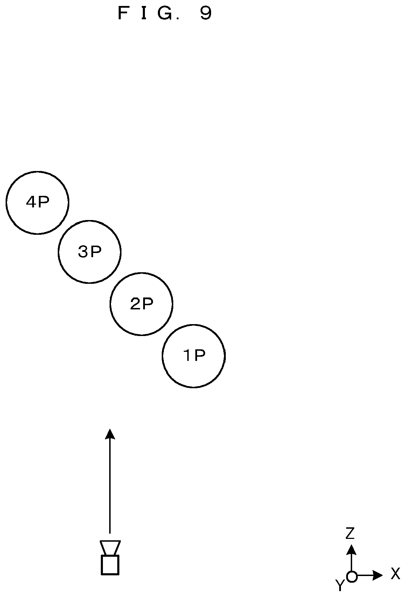

As described above, in the game of the exemplary embodiment, a 3D virtual space is represented with orthographic projection. Therefore, if models that are aligned on the same axis in the depth direction in the virtual space are rendered as they are, there is a possibility that a part of one model may be represented as if being stuck in a part of another model. For example, a multiplayer game with four players is assumed. It is assumed that, as shown in FIG. 7, four player characters are located at the same coordinates on the Z axis, which is the depth direction (imaging direction of the virtual camera), and are aligned at a close distance on an axis in the right-left direction (X axis in FIG. 7). In this case, there is a possibility that a part of one player character may be represented as if being stuck in a part of another player character (see, for example, FIG. 8). Therefore, in this example, in a so-called depth test (also called Z test), offset values are added and written to a depth buffer (also called Z buffer) such that the depth values (Z coordinates) of the player characters become different from each other. In the following description, offset values used in the depth test are referred to as "depth test offset values". Accordingly, as shown in FIG. 9, a positional relationship is established such that the positions of the respective player characters do not overlap each other on the Z axis, and rendering processing is performed on pixels, thereby avoiding occurrence of representation of being stuck as described above. Game processing such as collision detection processing is performed on the basis of the position on the Z axis in the virtual space before the offset is added. That is, main game processing is performed on the basis of the actual position on the Z axis in the virtual space, and when rendering a game image resulting from the game processing, offset values are added to make depth values different form each other as described above, and then the rendering is performed.

The above depth test offset values may be used not only for player characters but also for other character objects. For example, for all character objects that appear during the game, depth test offset values may be set in advance such that the depth values of the respective character objects become different from each other. In the depth test, writing to the depth buffer may be performed using the depth test offset values which are set for the respective characters.

### [SSAO-related processing for character shadow representation]

Next, an outline of processing related to SSAO (Screen Space Ambient Occlusion) in the exemplary embodiment will be described. SSAO itself is a known method, and thus the detailed description thereof is omitted. SSAO is a method in which, for a certain point of interest, AO (ambient occlusion) indicating the degree to which the amount of ambient light is attenuated by hiding objects around the point of interest, is calculated with limitation to a screen space (range of a screen). That is, SSAO is a method in which, for the location in the virtual space corresponding to each pixel, the degree of hiding by the environment around the location is calculated in an approximate manner. Although several specific algorithms for SSAO are known, the basic algorithm is as follows. First, as a preparation for SSAO which is performed as post-processing, depth information (depth buffer or depth map) is created when rendering a certain scene. In the SSAO processing, the following processes are performed for each pixel. First, a pixel to be a point of interest is determined, and locations around the pixel are randomly sampled. The number of locations to be sampled is any number, and the larger the number of locations to be sampled is, the higher the calculation load is. Next, the depth value of a sampling point is obtained. For example, a position on a clipping space obtained by projecting the position of the sampling point is calculated. Then, the depth value of the sampling point is compared with the depth value of the coordinate, corresponding to the sampling point, in the above created depth information. By this comparison, it can be determined whether or not the sampling point is a hidden location. For example, if the depth value of the sampling point is smaller than the depth value in the depth information, the sampling point can be considered as being not hidden. Such comparison is performed for each sampling point, and a "hiding factor" is determined on the basis of the ratio of the number of hidden sampling points. Then, whether or not to render a shadow on the above point of interest and the strength of the shadow at the point of interest are determined on the basis of the hiding factor.

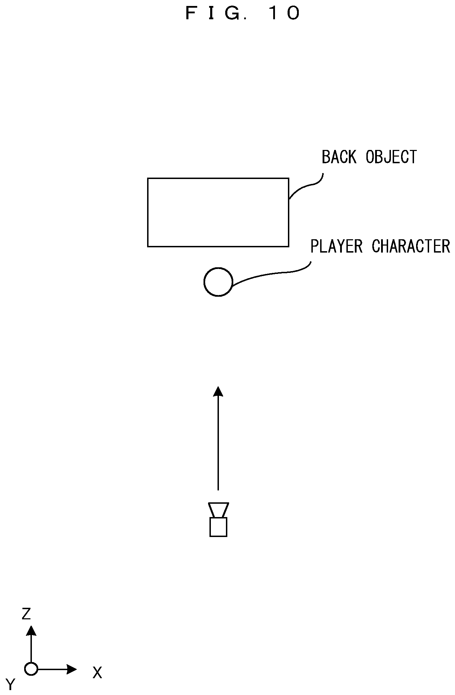

In the exemplary embodiment, for example, a positional relationship shown in FIG. 10 is assumed, and the case of rendering the shadow of a player character on a back object located behind the player character is assumed. When representing the shadow of the player character in such a case, the following control is further performed in the SSAO processing described above, and a 2D game-like shadow is rendered.
(A) Offset control of sampling points
(B) Control in which the attenuation of a light amount due to a distance in the depth direction is ignored

### [Offset control of sampling points]

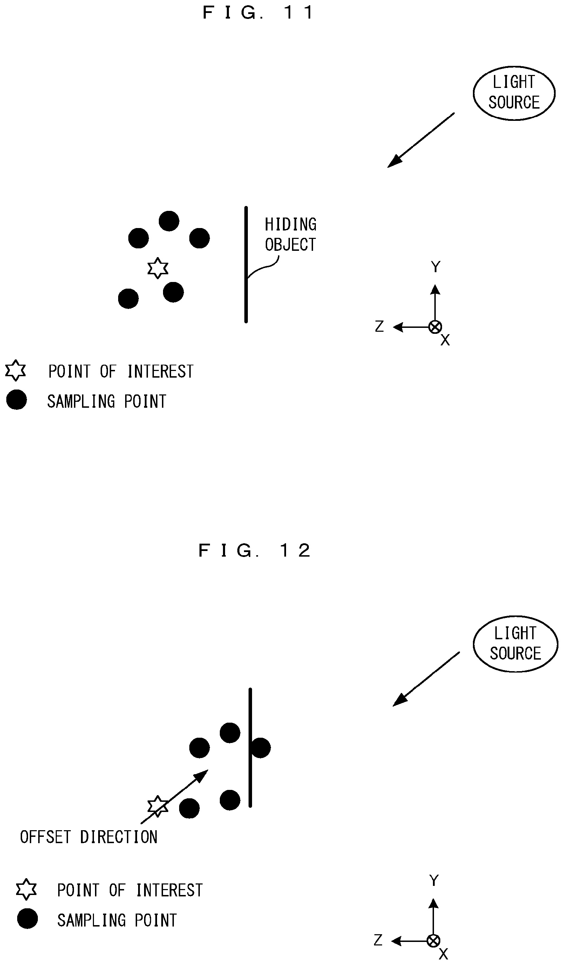

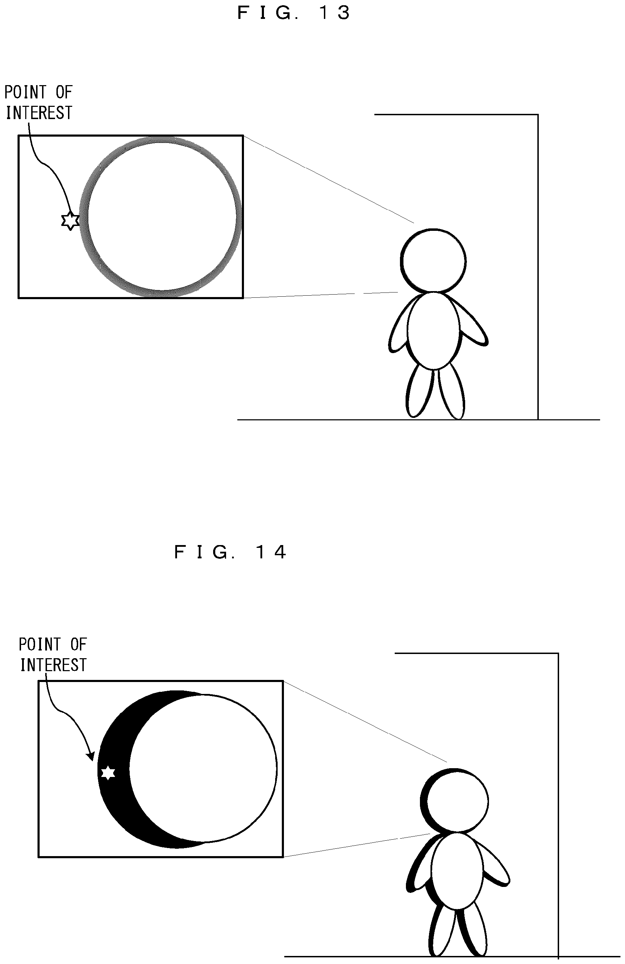

In the exemplary embodiment, after the sampling points around the above point of interest are taken, when comparing with the depth value in the depth information, a predetermined offset value is added to the position of each sampling point, and then the comparison is performed. Hereinafter, an offset value used in the SSAO processing is referred to as "SSAO offset value". For example, sampling points are determined at a position shown in FIG. 11. FIG. 11 schematically shows the positional relationship between a point of interest, sampling points, and a light source in the virtual space. In FIG. 11, the Z axis corresponds to the depth direction of the screen. In the exemplary embodiment, SSAO offset values are added in a direction toward the light source for the sampling points as shown in FIG. 12. Then, comparison with the depth value in the depth information is performed on the basis of the sampling points after the offset. Therefore, in the case of the example in FIG. 12, as a result of offsetting the sampling points, the sampling points that are closer to a hiding object (e.g., the player character in FIG. 10) are compared. As a result, the ratio of sampling points treated as being "hidden" is larger than in the case of FIG. 11. Accordingly, a shadow can be rendered for the point of interest (pixel) at which a shadow is not rendered in normal SSAO processing. In particular, in the case where the positional relationship between the player character and the back object is assumed as described above, a higher hiding factor can be set for a point of interest for which a lower hiding factor is set in normal SSAO processing. As a result, the shadow of the player character on the back object can be shown more clearly, so that a 2D game-like shadow can be rendered. For example, in normal SSAO processing, it is assumed that the shadow of a player character is projected as shown in FIG. 13. In FIG. 13, an example of the shadow of the player character is shown, and an enlarged view of a head area is shown on the upper left side. As shown in the enlarged view, in the example in FIG. 13, no shadow is rendered on a pixel that is a point of interest. In contrast, by performing SSAO processing with sampling points being offset as in the exemplary embodiment, a shadow can be projected as shown in FIG. 14. In FIG. 14, the shadow is rendered on the pixel that is a point of interest. This is because the ratio of "hidden" sampling points for the point of interest is determined to be high, and as a result, a higher hiding factor is set for the point of interest. By this processing, the shadow can be represented as if being thicker than in the case of a shadow rendered by a normal rendering method, so that the player character can be more 2D game-like in appearance.

### [Control in which attenuation of degree of hiding due to distance in depth direction is ignored]

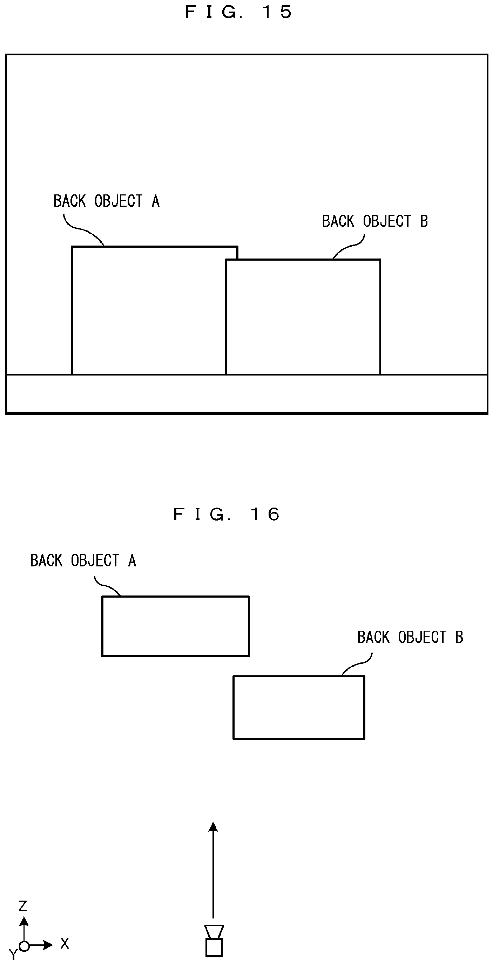

Next, control in which the attenuation of the degree of hiding due to a distance in the depth direction is ignored, will be described. As described above, in the exemplary embodiment, since the 3D space is rendered with orthographic projection, a game image is represented without perspective that provides a sense of perspective. Therefore, for example, even in an image in which objects appear to two-dimensionally overlap on the screen at the same depth position as in FIG. 15, the objects may be placed at different positions on the axis in the depth (imaging) direction as shown in FIG. 16, in an overhead view of the virtual space. The same applies to an image in which two back objects appear to be aligned side by side. This is because, for example, for ease of game development (efficiency of level design and map design, etc.) or for the convenience of game processing, a virtual space in which back objects are placed as shown in FIG. 16 may be used as a virtual space configuration for a game for which orthographic projection is assumed.

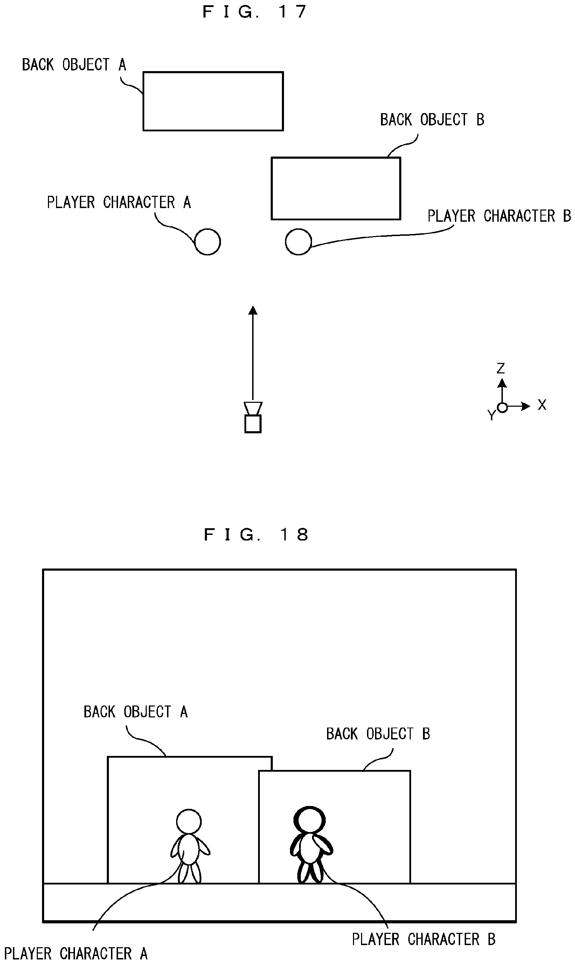

Here, for example, for the above virtual space, it is assumed that there are two player characters with a positional relationship shown in FIG. 17. In FIG. 17, the positional relationship is that a player character B and a back object B are close to each other in terms of distance in the depth direction, and the back object B is immediately behind the player character B. On the other hand, the positional relationship is that a player character A and a back object A are far apart in terms of distance in the depth direction. In such a positional relationship, when normal rendering processing (normal SSAO processing) is performed with orthographic projection, the shadow of each player character may be represented, for example, as shown in FIG. 18. That is, the shadow of the player character B is represented so as to be shown on the back object B which is immediately behind the player character B. In other words, a part of the back object B is treated as being in a state where the degree of hiding by the player character B is high. On the other hand, the player character A is at a distance in the depth direction from the back object A. In normal SSAO processing, it is common to attenuate the degree of hiding if the difference in depth between each sampling point and a hiding object is large, thereby making it less likely to be influenced by hiding by an object at a distance. Thus, the back object A is treated as being not hidden by the player character A. This results in an image in which the shadow of the player character A is not rendered on the back object A. That is, in normal SSAO processing, taking into consideration the difference in depth between the position of an object that is a hiding object and the position at which the shadow of the hiding object is to be located, the degree of hiding is attenuated, and the shadow is represented.

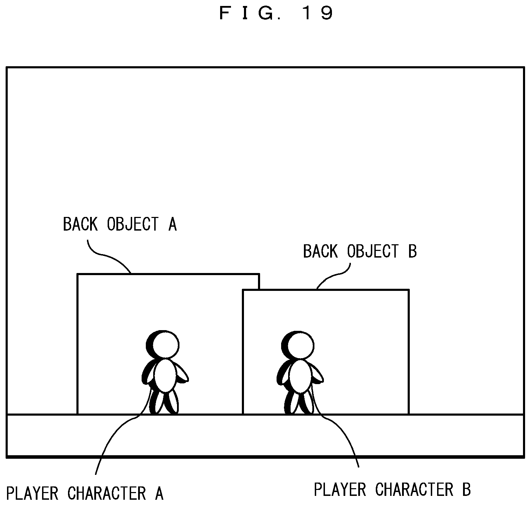

In this respect, in the exemplary embodiment, processing related to SSAO is performed such that the attenuation of the degree of hiding based on the difference in depth as described above is not performed; in other words, the difference in depth is ignored. As a result, shadows can be represented as shown in FIG. 19. FIG. 19 shows that the shadow of the player character A is rendered even on the back object A, regardless of the actual difference in the depth direction in the virtual space. It is noted that FIG. 19 shows a result with the addition of the offset to the sampling points described above. Accordingly, shadow representation that gives no uncomfortable feeling when considered as a 2D game is enabled. In addition, a plurality of back objects may be placed in the virtual space in multiple layers (at different positions in the depth direction). In this case as well, a shadow can be rendered on each back object, making these back objects appear as if being in the same layer.

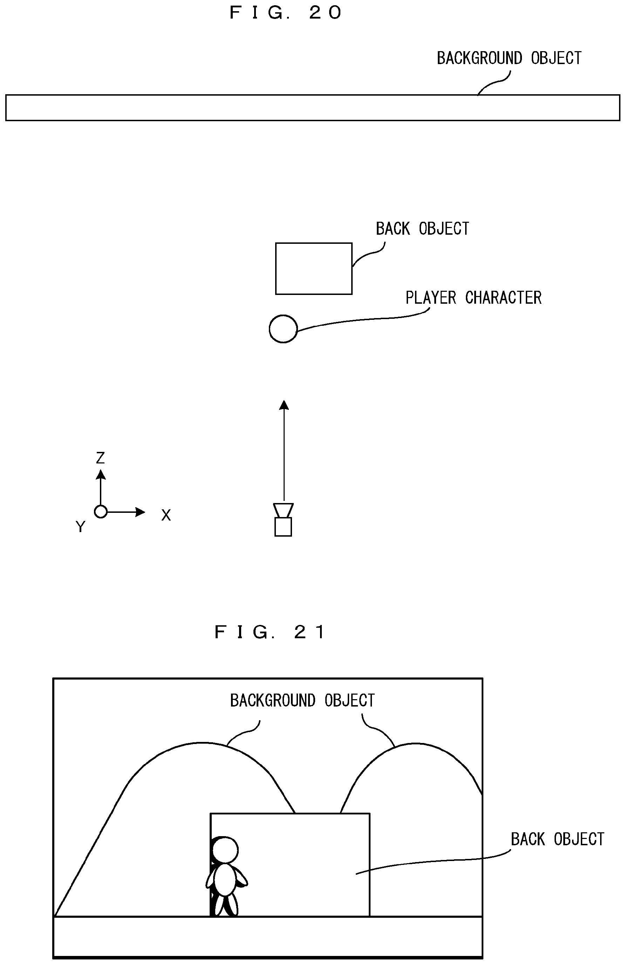

As for the shadow rendering based on the above SSAO, in the exemplary embodiment, a process of limiting rendering targets for shadows is further performed. For example, it is assumed that a player character, a back object, and a background object are placed as shown in FIG. 20. In this case, it is assumed that it is desired to make the back object appear as if being immediately behind the player character, while making the background object appear as if being at a distance from the player character, not immediately behind the player character. In this case, the shadow (of the player character) is rendered on the back object, but not on the background object, thereby enabling representation that gives a sense of perspective. Taking such a case as an example, if the above control in which the difference in depth is ignored is merely performed, the shadow is also rendered on the background object. Therefore, in the exemplary embodiment, control in which pixels corresponding to the background object are excluded from rendering targets for a shadow based on the above SSAO is further performed. In the exemplary embodiment, such control is performed such that pixels at which it is not desired to render a shadow are "masked". That is, a mask image in which a portion other than pixels at which it is desired to render a shadow (in the case of FIG. 20, pixels at which the back object is rendered) is masked, is prepared. Then, when rendering a shadow determined on the basis of SSAO, by using this mask image, no shadow is rendered on the masked portion. FIG. 21 shows an example of a screen in which no shadow is rendered on the background portion. FIG. 21 shows that the shadow of the player object is rendered on the back object (pixels corresponding to the back object) and is not rendered on the background object (pixels corresponding to the background object).

### [Details of processing of exemplary embodiment]

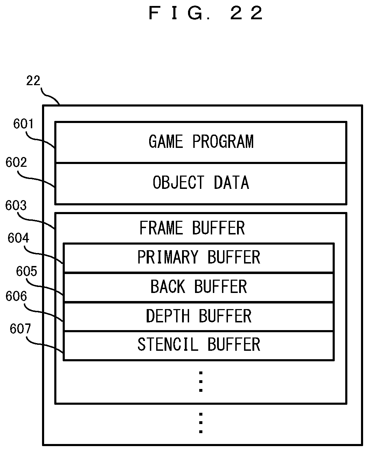

Next, the rendering processing in the exemplary embodiment will be described in more detail with reference to FIG. 22 to FIG. 26.

### [Data to be used]

First, various kinds of data used in the processing of the exemplary embodiment will be described. FIG. 22 illustrates a memory map showing an example of various kinds of data stored in the storage section 22 of the game apparatus 2. In the storage section 22, a game program 601 and object data 602 are stored. The game program 601 is a program for executing game processing including image processing according to the exemplary embodiment. The object data 602 is data of various objects that appear in the game, such as the above player characters, back object, and background object. The object data 602 includes, for example, data of a 3D model of each object, etc.

The storage section 22 is also provided with a frame buffer 603 used as a memory area dedicated for image processing. In the frame buffer 603, a primary buffer 604, a back buffer 605, a depth buffer 606, a stencil buffer 607, etc., can be stored. In the primary buffer 604, an image to be finally outputted as a game image is stored. In the back buffer 605, a game image in the middle of the rendering processing (rendering pipeline) can be stored. That is, when rendering a certain scene, an image is written to the back buffer 605 in the middle of rendering, and a final completed image in the back buffer 605 is transferred to the primary buffer 604 and outputted as a game image. The depth buffer 606 is a temporary memory area for holding depth data of each pixel of the game image. The depth buffer 606 can also be used as depth information representing a distance from the virtual camera for each pixel. The stencil buffer 607 is a temporary memory area for holding data corresponding to the above mask image for identifying pixels at which the shadow of a character based on SSAO as described above is rendered or not rendered.

Next, the details of the processing in the exemplary embodiment will be described. Here, the rendering processing described above will be mainly described, and the detailed description of other game processing is omitted. In the exemplary embodiment, flowcharts described below are realized by one or more processors reading and executing the above program stored in one or more memories. In addition, the flowcharts are merely an example of the processing. Therefore, the order of each process step may be changed as long as the same result is obtained. In addition, the values of variables and thresholds used in determination steps are also merely examples, and other values may be used as necessary.

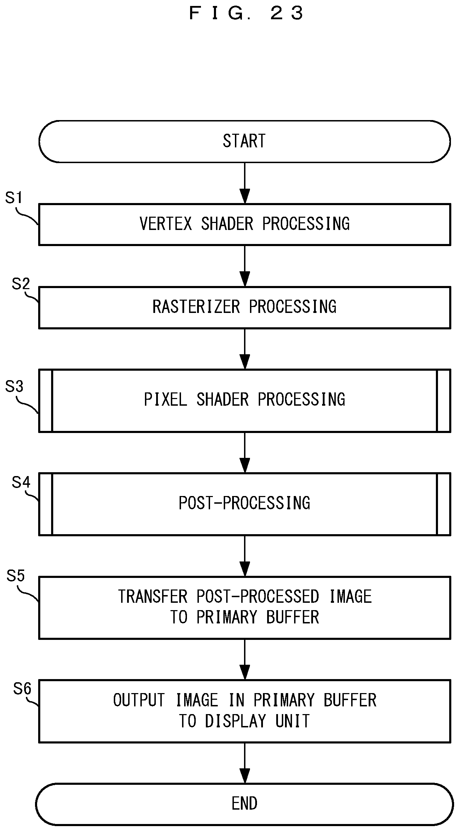

FIG. 23 is a flowchart showing the details of the rendering processing according to the exemplary embodiment. This processing is for rendering an image obtained by taking an image of the virtual space, in which various objects are placed, by the virtual camera, and is repeated multiple times per second according to a frame rate.

First, in step S1, the processor 21 executes vertex shader processing. In this processing, a coordinate transformation process of determining at which position in a game image each vertex of a polygon is to be rendered (in this example, an orthographic projection matrix is used), a process of determining the color of each vertex (lighting process), a process of determining the position of a texture to be attached, etc., are performed. Then, in the exemplary embodiment, in the vertex shader processing, a process of deforming vertex normals as described with reference to FIG. 2 to FIG. 6 above is also executed for a predetermined object. That is, a process of scaling the Z component of each vertex normal and normalizing the vertex normal is performed for a predetermined object. In the vertex shader processing, the lighting process is also performed, but at this time, the lighting process is performed using the original depth values without adding the above depth test offset values.

Next, in step S2, the processor 21 executes rasterizer processing. The rasterizer processing is known processing, and thus the detailed description thereof is omitted. In this processing, triangles that form the polygon are generated from processed vertex data passed from a vertex shader and filled with pixels.

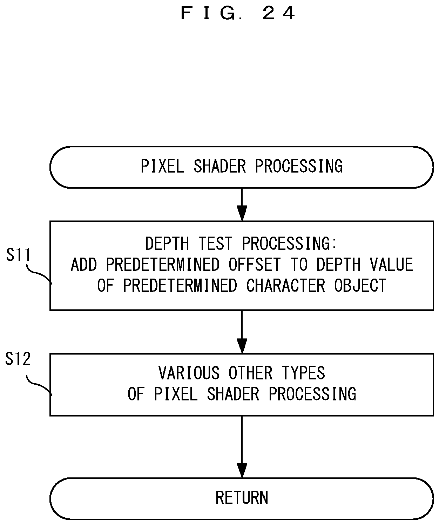

Next, in step S3, the processor 21 executes pixel shader processing. FIG. 24 is a flowchart showing the details of the pixel shader processing. In FIG. 24, first, in step S 11, the processor 21 executes depth test processing. In this processing, a process in which any pixel hidden by the shadow of another pixel is not rendered is performed on the basis of the depth value set for each pixel. Then, a process of writing the depth value of each pixel to the depth buffer 606 in order to determine whether or not each pixel is hidden is performed in the depth test processing. At this time, in the exemplary embodiment, control, in which the above depth test offset value is added to the depth value of a character object and the resulting value is written to the depth buffer 606 as described with reference to FIG. 7 to FIG. 9 above, is performed.

Next, in step S12, the processor 21 executes other pixel shader processing. For example, the processor 21 executes various types of pixel shader processing such as texture making and alpha testing. Then, the processor 21 ends the pixel shader processing.

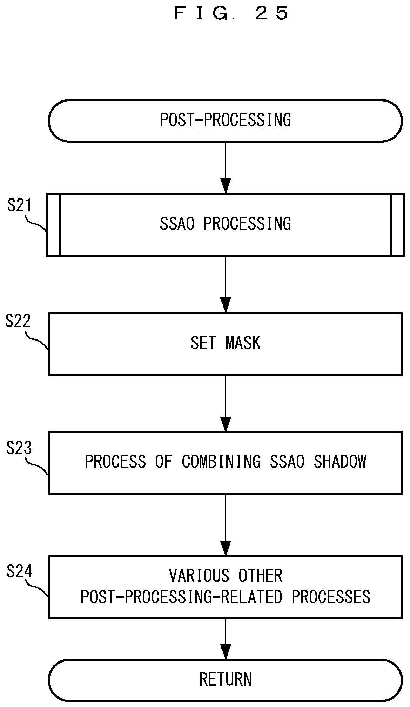

Referring back to FIG. 23, next, in step S4, the processor 21 executes post-processing. In the post-processing, various image effects are added to an image generated as a result of the above pixel shader processing. FIG. 25 is a flowchart showing the details of the post-processing.

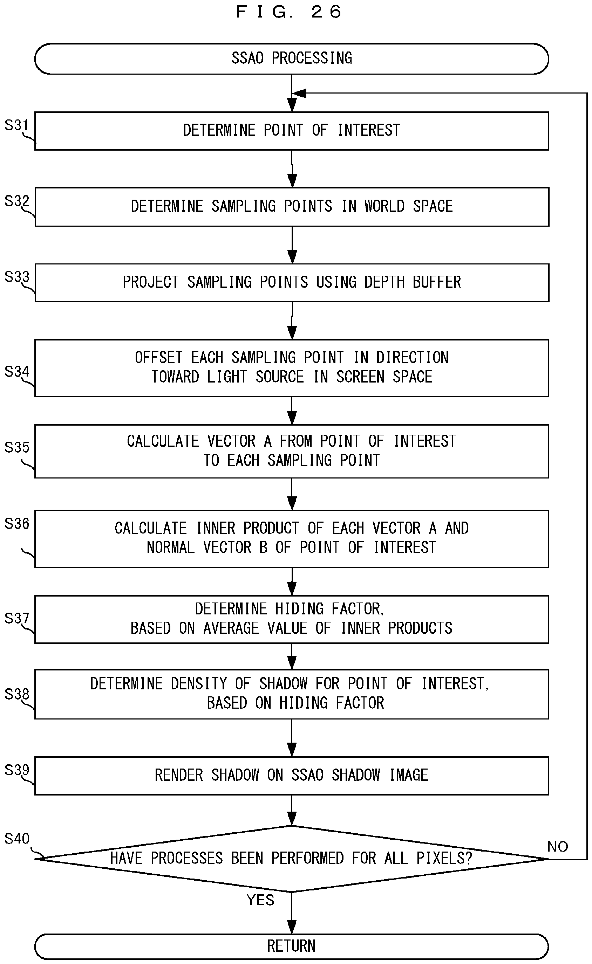

In FIG. 25, first, in step S21, the processor 21 executes SSAO processing. As described above, there are several known algorithms for SSAO, but in the exemplary embodiment, an example of processing based on a method called Alchemy AO is shown. FIG. 26 is a flowchart showing the details of the SSAO processing. In FIG. 26, first, in step S31, the processor 21 determines a pixel to be a point of interest.

Next, in step S32, the processor 21 determines a plurality of sampling points on the basis of the point of interest. For example, a hemisphere in the normal direction of the point of interest is considered, and randomly selected positions within this hemisphere are determined as sampling points. The sampling points are determined in a world space (or clipping space).

Next, in step S33, the processor 21 projects each of the above determined sampling points using the depth buffer 606 (i.e., depth information) generated in the above pixel shader processing. Accordingly, the positions of the sampling points on the screen space are determined.

Next, in step S34, the processor 21 adds the above SSAO offset value in the direction toward the light source, to each sampling point on the screen space. The specific SSAO offset value may be any value. For example, the SSAO offset value may be a predetermined value or a value automatically calculated each time using a predetermined formula.

Next, in step S35, the processor 21 calculates a vector A from the point of interest to each sampling point.

Next, in step S36, the processor 21 calculates the inner product of a normal vector B of the point of interest and each vector A calculated above.

Next, in step S37, the processor 21 calculates the average value of the inner products calculated above. Then, the processor 21 determines a hiding factor on the basis of the average value.

Here, in normal SSAO processing, when determining the hiding factor on the basis of the above inner products, calculation of "dividing by the length of the vector A" is also performed in order to take into consideration the attenuation of the degree of hiding (attenuation of a light amount) due to a distance in the depth direction. However, in the exemplary embodiment, as described with reference to FIG. 15 to FIG. 19 above, it is desired to render the shadow of a character such that the degree of hiding is not attenuated on the basis of the difference in depth. Therefore, after the above inner products are calculated, the average value thereof is calculated without performing the calculation of "dividing by the length of the vector A".

Next, in step S38, the processor 21 determines the density (strength) of a shadow for the above point of interest on the basis of the determined hiding factor. In the exemplary embodiment, the density of the shadow determined on the basis of the SSAO processing is constant. That is, in the case of this example, as a result, this determination is simply a choice between two options: to add or not to add a shadow.

Next, in step S39, the processor 21 generates an SSAO shadow image which is a texture image showing an image of the shadow determined by the SSAO processing (hereinafter, referred to as SSAO shadow). When a shadow is rendered for the point of interest, a pixel corresponding to the point of interest is rendered in black. Therefore, as the SSAO shadow image, for example, a texture image in which a portion to be shaded by the SSAO shadow is painted in black is generated.

Next, in step S40, the processor 21 determines whether or not the processes in steps S31 to S39 above have been performed for all pixels. If there is any pixel for which the processes have not been performed yet (NO in step S40), the processor 21 returns to step S31 above, and repeats the processing. If the processes have been performed for all the pixels (YES in step S40), the processor 21 ends the SSAO processing.

Referring back to FIG. 25, next, in step S22, the processor 21 generates a stencil buffer 607 with contents that mask all but the above back object. Subsequently, in step S23, the processor 21 combines the above SSAO shadow image with the image generated as a result of the above pixel shader. At this time, the SSAO shadow image is combined using the above stencil buffer 607. Accordingly, for example, an image in which the SSAO shadow is rendered on the back object, but not on the background object, can be generated.

Next, in step S24, the processor 21 executes various other post-processing-related processes (processes of applying various effects). For example, the processor 21 executes a process of applying a depth of field, a process of applying anti-aliasing or blooming, etc., to the image generated as a result of the above pixel shader, as appropriate. Then, the processor 21 ends the post-processing.

Referring back to FIG. 23, next, in step S5, the processor 21 transfers the final rendered image (stored in the back buffer 605 in this example) generated as a result of the above post-processing, to the primary buffer 604.

Next, in step S6, the processor 21 outputs the image in the primary buffer 604 to the display unit 27.

Then, the processor 21 ends the rendering processing.

This is the end of the detailed description of the rendering processing of the exemplary embodiment.

As described above, in the exemplary embodiment, in the SSAO processing, each sampling point is offset to the light source side, and comparison with the depth value is performed. Furthermore, in the exemplary embodiment, the control in which the attenuation of the degree of hiding based on the difference in depth is ignored is also performed. Accordingly, when rendering the shadow of the player character on the back object, the range where the shadow shown on the back object is rendered is expanded, and a 2D game-like shadow can be represented.

In the exemplary embodiment, in the vertex shader, a predetermined portion of a 3D model character is deformed such that vertex normals thereof are directed toward the light source. Accordingly, a more planar representation of the deformed portion is enabled. In addition, when combined with the representation of the shadow of the character by the SSAO processing described above, the 3D model character and the shadow thereof can be represented with a sense of unity as a 2D game-like image.

In the exemplary embodiment, in the depth test, the above depth test offset values are added such that the depth value of each character object is different from those of the other character objects, and the resulting values are written to the depth buffer. As described above, in the SSAO processing, a shadow is rendered such that the difference in the depth direction is ignored, so that, even when the depth value is changed in the depth test as described above, the shadow of the character is rendered without being influenced by this change. Accordingly, in a game using orthographic projection, a game image can be rendered without representation of characters being stuck in each other, etc., while achieving a 2D game-like appearance, thereby achieving an even higher synergistic effect.

### [Modifications]

In the above embodiment, the example of the processing based on Alchemy AO has been shown as an example of the SSAO processing. The present disclosure is not limited thereto, and in SSAO with another algorithm, a process of offsetting each sampling point and then comparing the depth value thereof may be performed as described above.

In another exemplary embodiment, instead of directly offsetting the above sampling points, the point of interest itself may be offset, and sampling points determined on the basis of the point of interest after the offset may be used.

In the above embodiment, the case where the rendering processing is executed by the single game apparatus 2 has been described. In another exemplary embodiment, this processing may be executed in an information processing system that includes a plurality of information processing terminals. For example, in an information processing system that includes a terminal side apparatus and a server side apparatus capable of communicating with the terminal side apparatus via a network, some processes of the above rendering processing may be executed by the server side apparatus. Alternatively, in the information processing system, a server side system may include a plurality of information processing terminals, and a process to be executed in the server side system may be divided and executed by the plurality of information processing terminals.

While the present disclosure has been described in detail, the foregoing description is in all aspects illustrative and not restrictive. It is to be understood that numerous other modifications and variations can be devised without departing from the scope of the present disclosure.

## Claims

1. A game program causing a processor of an information processing apparatus to:
control a player character object and a virtual camera in a virtual space in which at least the player character object is placed and a back object is placed on a depth side with respect to the player character object;
render the virtual space in a frame buffer with orthographic projection and by performing a depth test (S1 to S6);
determine a degree of hiding for each pixel on the basis of a hiding determination method based on SSAO (Screen Space Ambient Occlusion), the hiding determination method being a method in which, when comparing each of depth values of a plurality of sampling points set around a position, in the virtual space, corresponding to each pixel with a depth of a corresponding position in a depth buffer, a first offset in a predetermined direction is added to a position of the sampling point, and the comparison is performed (S21); and
further render a shadow at a pixel, in the frame buffer, corresponding to a portion for which the degree of hiding is determined to be high (S23).

2. The game program according to claim 1, wherein
a plurality of the back objects are placed in the virtual space in multiple layers at positions different in depth from each other, and
the hiding determination method is a hiding determination method in which the degree of hiding is not attenuated on the basis of a difference from the depth.

3. The game program according to claim 2, wherein
a background object is further placed in the virtual space on the depth side with respect to the back object, and
the game program causes the processor to render the shadow with pixels corresponding to the background object being excluded from targets.

4. The game program according to claim 1, further causing the processor to deform and render a predetermined object so as to make a normal vector thereof closer to a direction toward a position of the virtual camera, in the rendering of the virtual space in the frame buffer.

5. The game program according to claim 4, further causing the processor to deform the normal vector so as to make the normal vector closer to the direction toward the position of the virtual camera, by scaling a component thereof in a depth direction by a predetermined magnification and then normalizing a length of the normal vector.

6. The game program according to claim 2, further causing the processor to render a plurality of character objects placed in the virtual space and including the player character object, with a second offset being added such that each character object has a different depth value, in the rendering in the frame buffer.

7. A game system (2) comprising a processor, the processor being configured to:
control a player character object and a virtual camera in a virtual space in which at least the player character object is placed and a back object is placed on a depth side with respect to the player character object;
render the virtual space in a frame buffer with orthographic projection and by performing a depth test (S1 to S6);
determine a degree of hiding for each pixel on the basis of a hiding determination method based on SSAO (Screen Space Ambient Occlusion), the hiding determination method being a method in which, when comparing each of depth values of a plurality of sampling points set around a position, in the virtual space, corresponding to each pixel with a depth of a corresponding position in a depth buffer, a first offset in a predetermined direction is added to a position of the sampling point, and the comparison is performed (S21); and
further render a shadow at a pixel, in the frame buffer, corresponding to a portion for which the degree of hiding is determined to be high (S23).

8. The game system according to claim 7, wherein
a plurality of the back objects are placed in the virtual space in multiple layers at positions different in depth from each other, and
the hiding determination method is a hiding determination method in which the degree of hiding is not attenuated on the basis of a difference from the depth.

9. The game system according to claim 8, wherein
a background object is further placed in the virtual space on the depth side with respect to the back object, and
the processor is configured to render the shadow with pixels corresponding to the background object being excluded from targets.

10. The game system according to claim 7, wherein the processor is further configured to deform and render a predetermined object so as to make a normal vector thereof closer to a direction toward a position of the virtual camera, in the rendering of the virtual space in the frame buffer.

11. The game system according to claim 10, wherein the processor is further configured to deform the normal vector so as to make the normal vector closer to the direction toward the position of the virtual camera, by scaling a component thereof in a depth direction by a predetermined magnification and then normalizing a length of the normal vector.

12. The game system according to claim 8, wherein the processor is further configured to render a plurality of character objects placed in the virtual space and including the player character object, with a second offset being added such that each character object has a different depth value, in the rendering in the frame buffer.

13. A game processing method executed by a processor of an information processing apparatus, the game processing method causing the processor to:
control a player character object and a virtual camera in a virtual space in which at least the player character object is placed and a back object is placed on a depth side with respect to the player character object;
render the virtual space in a frame buffer with orthographic projection and by performing a depth test (S1 to S6);
determine a degree of hiding for each pixel on the basis of a hiding determination method based on SSAO (Screen Space Ambient Occlusion), the hiding determination method being a method in which, when comparing each of depth values of a plurality of sampling points set around a position, in the virtual space, corresponding to each pixel with a depth of a corresponding position in a depth buffer, a first offset in a predetermined direction is added to a position of the sampling point, and the comparison is performed (S21); and
further render a shadow at a pixel, in the frame buffer, corresponding to a portion for which the degree of hiding is determined to be high (S23).

14. The game processing method according to claim 13, wherein
a plurality of the back objects are placed in the virtual space in multiple layers at positions different in depth from each other, and
the hiding determination method is a hiding determination method in which the degree of hiding is not attenuated on the basis of a difference from the depth.

15. The game processing method according to claim 14, wherein
a background object is further placed in the virtual space on the depth side with respect to the back object, and
the game processing method causes the processor to render the shadow with pixels corresponding to the background object being excluded from targets.

16. The game processing method according to claim 13, further causing the processor to deform and render a predetermined object so as to make a normal vector thereof closer to a direction toward a position of the virtual camera, in the rendering of the virtual space in the frame buffer.

17. The game processing method according to claim 16, further causing the processor to deform the normal vector so as to make the normal vector closer to the direction toward the position of the virtual camera, by scaling a component thereof in a depth direction by a predetermined magnification and then normalizing a length of the normal vector.

18. The game processing method according to claim 14, further causing the processor to render a plurality of character objects placed in the virtual space and including the player character object, with a second offset being added such that each character object has a different depth value, in the rendering in the frame buffer.

19. A game apparatus (2) comprising a processor, the processor being configured to:
control a player character object and a virtual camera in a virtual space in which at least the player character object is placed and a back object is placed on a depth side with respect to the player character object;
render the virtual space in a frame buffer with orthographic projection and by performing a depth test (S1 to S6);
determine a degree of hiding for each pixel on the basis of a hiding determination method based on SSAO (Screen Space Ambient Occlusion), the hiding determination method being a method in which, when comparing each of depth values of a plurality of sampling points set around a position, in the virtual space, corresponding to each pixel with a depth of a corresponding position in a depth buffer, a first offset in a predetermined direction is added to a position of the sampling point, and the comparison is performed (S21); and
further render a shadow at a pixel, in the frame buffer, corresponding to a portion for which the degree of hiding is determined to be high (S23).

20. The game apparatus according to claim 19, wherein
a plurality of the back objects are placed in the virtual space in multiple layers at positions different in depth from each other, and
the hiding determination method is a hiding determination method in which the degree of hiding is not attenuated on the basis of a difference from the depth.

21. The game apparatus according to claim 20, wherein
a background object is further placed in the virtual space on the depth side with respect to the back object, and
the processor is configured to render the shadow with pixels corresponding to the background object being excluded from targets.

22. The game apparatus according to claim 19, wherein the processor is further configured to deform and render a predetermined object so as to make a normal vector thereof closer to a direction toward a position of the virtual camera, in the rendering of the virtual space in the frame buffer.

23. The game apparatus according to claim 22, wherein the processor is further configured to deform the normal vector so as to make the normal vector closer to the direction toward the position of the virtual camera, by scaling a component thereof in a depth direction by a predetermined magnification and then normalizing a length of the normal vector.

24. The game apparatus according to claim 20, wherein the processor is further configured to render a plurality of character objects placed in the virtual space and including the player character object, with a second offset being added such that each character object has a different depth value, in the rendering in the frame buffer.
